(19) Europäisches Patentamt / European Patent Office / Office européen des brevets

(11) **EP 2 258 037 B1**

(12) **FASCICULE DE BREVET EUROPEEN**

(45) Date de publication et mention
de la délivrance du brevet:
**13.06.2018 Bulletin 2018/24**

(21) Numéro de dépôt: **09721767.3**

(22) Date de dépôt: **18.03.2009**

(51) Int Cl.:
***H02M 3/158*** *(2006.01)*

(86) Numéro de dépôt international:
**PCT/EP2009/053215**

(87) Numéro de publication internationale:
**WO 2009/115559 (24.09.2009 Gazette 2009/39)**

(54) **ALIMENTATION A DECOUPAGE DC DC NON ISOLEE**

STROMVERSORGUNG MIT NICHTISOLIERTER DC-DC-TEILUNG

POWER SUPPLY WITH NON-ISOLATED DC DC SPLITTING

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **21.03.2008 FR 0801574**

(43) Date de publication de la demande:
**08.12.2010 Bulletin 2010/49**

(73) Titulaire: **PSA Automobiles SA
78300 Poissy (FR)**

(72) Inventeurs:
• **CHATROUX, Daniel
F-38470 Teche (FR)**
• **DOLHAGARAY, Jean-Claude
F-91400 Saclay (FR)**
• **ROY, Francis
F-91940 Les Ulis (FR)**

(74) Mandataire: **Ménès, Catherine et al
PSA Automobiles SA
VPIB - LG081
18 rue des Fauvelles
92250 La Garenne Colombes (FR)**

(56) Documents cités:
DE-A1-102006 017 851    US-A1- 2003 095 421
US-A1- 2007 013 349

**Description**

La présente invention concerne une alimentation à découpage DC DC non isolée, en particulier pour piles à combustibles.

Les piles à combustibles sont utilisées dans de nombreuses applications. Elles sont par exemple utilisées comme source d'énergie dans les véhicules automobiles électriques, ou pour recharger des batteries, par exemple pour la recharge de batterie de dispositifs portables (téléphones par exemple).

L'énergie électrique produite par une pile à combustible ne peut généralement pas être utilisée directement. En effet la pile ne fournit pas une tension constante. La tension produite est généralement plus faible que celle nécessaire à l'application, le nombre de cellules de la pile étant généralement optimisé selon des critères techniques et de coûts. Enfin, la tension de sortie varie avec le courant.

Des alimentations à découpage, DC DC non isolées, sont ainsi utilisées pour réguler et amener la tension fournie par une pile à combustible, à un niveau requis.

Ces alimentations encore appelées convertisseurs ou hacheurs, permettent la conversion d'une tension continue en une autre tension continue, sur une plage de tension allant de quelques volts à quelques milliers de volts. Plus généralement, elles permettent de convertir une tension continue en une autre tension continue, qui peut être plus élevée ou plus basse et qui peut être de même polarité ou de polarité inverse, selon la topologie de l'alimentation.

Une alimentation à découpage DC DC est un circuit électrique généralement tripôle avec une borne d'entrée, une borne de sortie et une borne commune. Ce circuit électrique comprend au moins un interrupteur et une diode et un élément de stockage d'énergie, typiquement une inductance. La tension d'entrée est appliquée entre la borne d'entrée et le commun. Un condensateur de sortie est connecté entre la borne de sortie et le commun. Le transfert d'énergie de l'entrée vers la sortie se fait par l'intermédiaire de l'élément de stockage d'énergie, qui stocke l'énergie puis la restitue au rythme de la commutation de l'interrupteur à l'état ouvert et l'état fermé. La régulation de tension est assurée par le temps de conduction (état fermé) de l'interrupteur à découpage.

En fonction de la gamme de puissance, et du gain recherchés pour une application, différentes topologies d'alimentation bien connues sont proposées. Ce sont les topologies élévateur de tension dites "boost", abaisseur de tension, "buck", inverseur et élévateur/abaisseur de tension "buck-boost", ou les topologies "Cuk" du nom de son inventeur, élévateur/abaisseur de tension ou SEPIC ("*Single ended primary inductor converter*").

L'interrupteur S est généralement réalisé par un transistor à effet de champ. C'est pourquoi on parle indifféremment d'interrupteur à l'état ouvert, ou bloqué, et à l'état fermé ou passant. Typiquement dans la gamme des tensions d'entrée et de sortie de quelques volts à quelques milliers de Volts, on utilise de préférence un transistor de type IGBT (*Isolated Gate Bipolar Transistor*), capable de supporter des tensions élevées à ses bornes. Cette solution technologique permet d'assurer la fiabilité du convertisseur tout en minimisant le coût des composants.

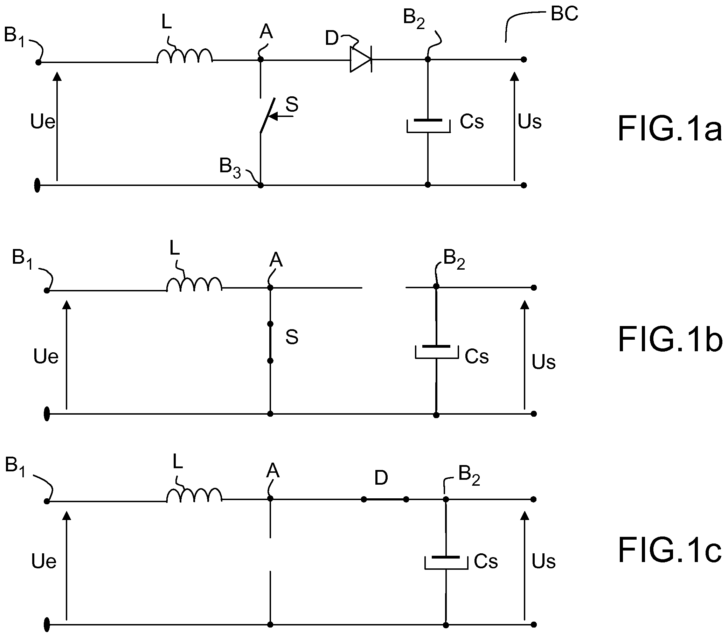

La figure 1a illustre ainsi un convertisseur élévateur de tension BC (boost). C'est un tripôle avec une topologie en étoile (comme pour les convertisseurs buck ou buck/boost): un interrupteur S, une inductance L et une diode D forment chacun une branche du tripôle. Les branches partent toutes d'un noeud commun A, et leur terminaison forme l'une des trois bornes du tripôle.

Dans un convertisseur de type élévateur, l'interrupteur S est connecté entre le noeud A et la borne commune $B_3$. La diode a son anode connectée au noeud A, et sa cathode connectée à la borne de sortie $B_2$. L'inductance L est connectée entre la borne d'entrée $B_1$ et le noeud A.

L'interrupteur est commandé de manière habituelle par un signal impulsionnel à fréquence constante, qui le met alternativement dans un état ouvert, et un état fermé.

Les deux phases de fonctionnement d'un tel convertisseur, qui correspondent aux deux états fermé et ouvert de l'interrupteur S, sont les suivantes :

- lorsque l'interrupteur S est fermé : l'inductance L est en parallèle sur la source de tension d'entrée et le courant augmente dans l'inductance. C'est la phase de stockage d'énergie. La diode D est alors bloquée. Le schéma électrique équivalent est illustré sur la figure 1b.
- lorsque l'interrupteur S est ouvert, l'inductance L se trouve en série avec la source de tension d'entrée $U_e$. Le courant traverse l'inductance L et la diode D et le condensateur de sortie $C_s$ se charge. C'est la phase de transfert d'énergie. Le schéma électrique équivalent est illustré sur la figure 1c.

La tension aux bornes du condensateur de sortie $C_s$ devient plus élevée que la tension d'entrée. Le niveau de la tension de sortie est en pratique fonction des durées des temps d'ouverture et de fermeture de l'interrupteur. Si l'alimentation à découpage travaille à fréquence constante f et en mode de conduction continue (c'est à dire que le courant qui traverse l'inductance ne s'annule jamais), la tension de sortie Us est égale à $\alpha*$Ue, où $\alpha$ est le rapport cyclique entre le temps de fermeture de l'interrupteur et la période complète du cycle (1/f = t).

De manière connue, les alimentations à découpage ont comme inconvénient de provoquer une ondulation du courant dans le condensateur de sortie, ainsi qu'en entrée. L'amplitude de l'ondulation est d'ailleurs un des critères de mesure de qualité d'une telle alimentation.

Certaines sources d'énergie électrique comme la pile à combustible par exemple ne supportent pas une telle ondulation de courant, qui a pour effet de diminuer sa durée de vie.

Pour résoudre cette difficulté, il est connu d'utiliser une alimentation à découpage à cellules entrelacées. Chaque cellule est un convertisseur. La notion d'entrelacement vient de ce que les cellules conduisent à tour de rôle vers un condensateur de sortie.

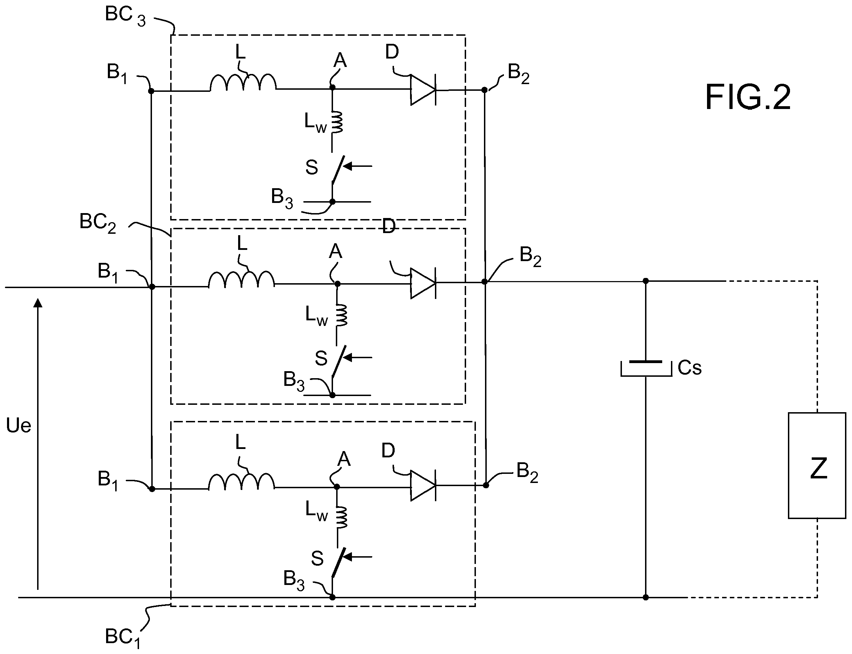

La figure 2 illustre une telle alimentation à découpage à cellules entrelacées, dans la topologie de convertisseur élévateur de tension (boost) de la figure 1a. Elle illustre plus particulièrement un premier exemple de réalisation dans lequel les cellules sont toutes connectées au même condensateur de sortie $C_s$.

Dans l'exemple, l'alimentation comprend n=3 cellules $BC_1$, $BC_2$, $BC_3$ identiques (L, S, D) en parallèle : leurs bornes $B_1$ sont reliées ensemble ; leurs bornes $B_2$ sont reliées ensemble ; leurs bornes $B_3$ sont reliées ensemble. L'alimentation comprend un unique condensateur de sortie $C_S$, connecté entre les bornes de sortie $B_2$ et de commun $B_3$ de chaque cellule. La tension d'entrée $U_e$ est appliquée entre les bornes d'entrée $B_1$ et de commun $B_3$ de chaque cellule.

Les n interrupteurs sont chacun commandés comme indiqué précédemment avec la figure 1a, avec un décalage temporel de durée fixe, correspondant à un déphasage entre chaque cellule de $2\pi/nf$. La fréquence des courants et des tensions vue par la charge est ainsi n fois supérieure à ce qui est obtenu avec une unique cellule. Les ondulations en entrée et dans le condensateur de sortie sont réduites. Le document US2003/0095421 montre une alimentation à découpage suivant le préambule de la revendication 1. Dans l'exemple de réalisation de la figure 2, on a un unique condensateur de sortie $C_s$ pour les n cellules entrelacées. C'est alors un condensateur de fort volume. Or dans chaque cellule, on a une inductance de câblage $L_w$ de la boucle interrupteur S, diode D, condensateur $C_s$. Comme le condensateur est de fort volume, les connexions nécessaires pour réaliser chaque boucle sont longues. Pour ces raisons les inductances de câblage $L_w$ sont fortes et induisent des pertes non négligeables. Le rendement de l'alimentation est dégradé.

Par ailleurs, il est généralement prévu de placer les interrupteurs et diodes à la surface d'un dissipateur ou d'une plaque à eau, pour permettre l'évacuation des pertes thermiques dissipées par ces composants. Pour que l'évacuation soit efficace, Il faut répartir les interrupteurs et diodes sur la surface du dissipateur ou de la plaque à eau, de manière à garantir une certaine distance entre eux. Dans ces conditions, avec un condensateur de sortie unique, commun aux n cellules, les distances entre les interrupteurs et les diodes sont augmentées, ce qui a pour effet d'augmenter aussi les inductances de câblage.

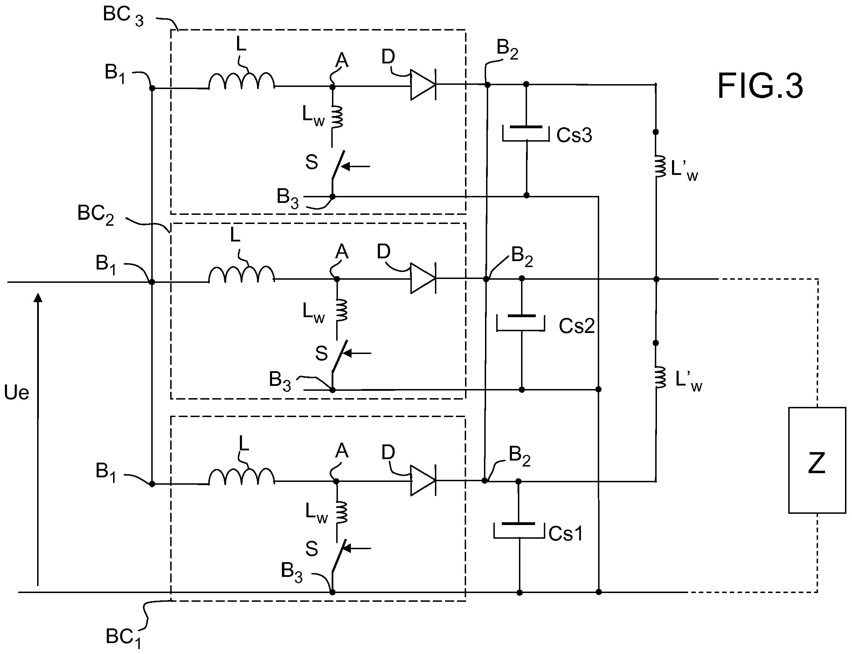

Un moyen de résoudre ce problème est de prévoir un condensateur de sortie $C_{s1}$, $C_{s2}$, $C_{s3}$ par cellule $BC_1$, $BC_2$, $BC_3$, comme illustré sur la figure 3. Les inductances de câblage $L_w$ des boucles sont alors réduites par la proximité des composants de chaque cellule avec le condensateur associé. Les différents interrupteurs et diodes peuvent être mieux répartis à la surface du dispositif de refroidissement, sans dégrader ces inductances $L_w$, permettant une évacuation optimisée des pertes thermiques de ces composants. Chaque condensateur est placé à proximité de la diode et de l'interrupteur associé.

Mais on a alors des inductances de câblage $L'_w$ supplémentaires, entre les condensateurs (Figure 3). Ces inductances de câblage ont pour inconvénient de s'opposer aux échanges de courants entre les condensateurs et de limiter l'efficacité de l'entrelacement : les courants efficaces dans chacun des condensateurs sont plus importants, ce qui dégrade le rendement de l'alimentation, et l'ondulation de courant dans les condensateurs de sortie et l'ondulation de la tension de sortie sont plus importants.

L'invention se propose de résoudre le problème technique posé par les inductances de câblage entre les composants dans les cellules, c'est à dire la dégradation du rendement, l'ondulation de courant en entrée et en sortie et les problèmes d'évacuation thermique.

Une solution technique a été trouvée dans l'association d'un circuit résonnant à chaque interrupteur, en sorte que la commutation à l'état ouvert de chaque interrupteur peut être réalisée à zéro de courant et de tension. On obtient une alimentation à découpage DC DC à cellules entrelacées DC DC à faible ondulation et fort rendement. L'invention concerne une alimentation à découpage suivant le préambule de la revendication 1. L'invention concerne donc une alimentation à découpage DC DC non isolée, pour fournir une tension continue à partir d'une tension continue appliquée en entrée, comprenant n cellules de conversion parallèles, entrelacées, n au moins égal à 2, chaque cellule comportant un interrupteur principal recevant une commande de commutation à l'état fermé et à l'état ouvert pour respectivement fermer ou ouvrir un chemin de conduction entre un premier noeud et un deuxième noeud de la cellule, permettant respectivement une phase de stockage d'énergie dans un élément de stockage et une phase de transfert d'énergie vers un condensateur de sortie connecté entre une borne de sortie de la cellule et une borne commune, l'interrupteur principal faisant partie d'un circuit résonant comportant un interrupteur auxiliaire permettant de déclancher une phase de résonance du circuit résonant, caractérisée en ce qu'elle comporte des moyens pour déclancher la phase de résonance alors que l'interrupteur principal de la cellule considérée est à l'état fermé, ladite phase de résonance permettant l'annulation du courant dans ledit interrupteur principal de la cellule, et des moyens pour ouvrir l'interrupteur principal pendant cette annulation du courant. L'invention concerne aussi un système d'alimentation d'une charge, comprenant une pile à combustible, et une alimentation à découpage DC DC apte à fournir en sortie un niveau régulé de tension continue à la charge.

D'autres avantages et caractéristiques de l'invention sont détaillés dans la description suivante en référence aux dessins illustrés d'un mode de réalisation de l'invention, donné à titre d'exemple non limitatif. Dans ces dessins :

- les figures 1a, 1b, 1c déjà décrites illustrent une cellule élévateur de tension de type boost, et ses deux phases de fonctionnement;
- les figures 2 et 3 illustrent deux modes de réalisation d'une alimentation à découpage DC DC à cellules entrelacées, selon l'état de l'art;
- la figure 4 est un schéma d'une cellule élévateur de tension comprenant un circuit résonnant associé à l'interrupteur de découpage selon l'invention;
- les figures 5, 6 et 7 illustrent les formes d'ondes de courant et de tension dans une telle cellule selon l'invention;
- les figures 8 et 9 illustrent deux exemples de réalisation correspondants d'alimentation à découpage DC DC à cellules entrelacées; et
- la figure 10 est un chronogramme des signaux de commande des interrupteurs S et des interrupteurs auxiliaires Saux de deux cellules de conversion d'une alimentation à découpage selon l'invention.

L'invention concerne une alimentation à découpage DC DC, à entrelacement de n cellules. Elle est expliquée en prenant plus particulièrement l'exemple d'une topologie élévateur de tension ou boost. Mais elle s'applique plus généralement à toutes les topologies d'alimentation à découpage DC DC, qu'elles soient du type élévateur (boost), abaisseur (buck), élévateur/abaisseur (SEPIC), ou élévateur/abaisseur et inverseur (buck/boost, Cuk). Ces différentes topologies sont bien connues. Elles comportent une cellule de conversion comprenant un interrupteur de découpage dont la commutation à l'état fermé commande une phase de stockage d'énergie, et dont la commutation à l'état ouvert commande une phase de transfert d'énergie vers un condensateur de sortie.

Plus particulièrement, dans ces topologies, une cellule de conversion comprend un interrupteur dont l'état fermé (passant) et l'état ouvert (bloqué) respectivement ferme ou ouvre un chemin de conduction entre un premier noeud et un deuxième noeud de la cellule, permettant respectivement une phase de stockage d'énergie dans un élément de stockage et une phase de transfert d'énergie vers un condensateur de sortie.

Selon l'invention, dans chaque cellule, on place l'interrupteur de découpage dans un circuit résonnant.

Ce circuit résonnant permet un blocage de l'interrupteur de découpage à zéro de courant, pour passer de la phase de stockage à la phase de transfert. Le blocage intervient aussi à zéro de tension. L'effet technique produit par un blocage sans pertes est de rendre sans effet les inductances de câblage $L_w$ de la boucle de transfert de charge sur le rendement de l'alimentation. Ainsi, même si elles sont élevées, elles n'interviennent plus dans la conversion. On peut donc les ignorer, utiliser un gros condensateur de sortie commun à toutes les cellules et disposer les composants de façon optimale dans l'espace, notamment les diodes et les interrupteurs, en rapport avec l'évacuation thermique.

La combinaison d'une topologie à entrelacement de cellules, et à circuit résonnant associé à l'interrupteur de découpage de chaque cellule permet ainsi d'obtenir une alimentation à découpage DC DC à faible ondulation et fort rendement.

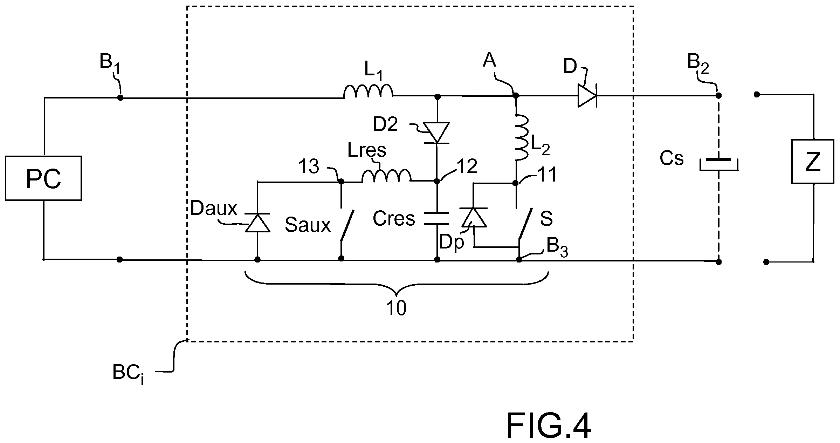

La figure 4 illustre un mode de réalisation de l'invention appliqué à des cellules $BC_i$ de type élévateur de tension d'une alimentation à découpage DC DC à n cellules $BC_i$ entrelacées, n entier au moins égal à 2.

La cellule $BC_i$ comprend un interrupteur de découpage S, une inductance L et une diode D connectés en étoile comme déjà décrit supra en relation avec la figure 1a. L'interrupteur S notamment est connecté entre le noeud A et le noeud $B_3$. Lorsqu'il est commuté à l'état fermé, il ferme le chemin de conduction entre ces deux noeuds A et B3, rebouclant ainsi l'inductance L sur la source de tension $U_e$ : c'est la phase de stockage d'énergie. Lorsqu'il est commuté à l'état ouvert (ou bloqué), il ouvre ce chemin de conduction entre A et $B_3$, ce qui déclenche la phase de transfert d'énergie dans le condensateur de sortie $C_s$.

L'interrupteur S est placé dans un circuit résonnant 10. Ce circuit résonnant 10, a pour fonction de permettre la commutation à l'état ouvert de l'interrupteur S à zéro de courant. Le passage de l'état fermé à l'état ouvert se fait aussi à zéro de tension. L'ouverture de l'interrupteur S est ainsi effectuée sans pertes. Dans ces conditions, l'inductance de câblage $L_w$ de la boucle de transfert d'énergie S, D, $C_S$ (figure 2) a alors un impact nul sur le rendement de la cellule. On peut alors réaliser une alimentation à découpage à n cellules entrelacées et un condensateur de sortie Cs commun aux n cellules, avec un rendement optimal.

Le circuit résonnant comprend notamment un interrupteur auxiliaire Saux, par lequel une phase de résonance est déclenchée, pendant la phase de stockage d'énergie, alors que l'interrupteur S est fermé.

La résonance permet d'annuler le courant dans l'interrupteur S. Ce dernier peut alors être commuté à l'état ouvert, faisant passer l'alimentation en phase de transfert d'énergie.

Elle permet aussi avantageusement d'annuler le courant dans l'interrupteur auxiliaire Saux, qui peut être commuté à l'état bloqué sans pertes (à zéro de courant).

Dans un mode de réalisation préféré, le circuit résonnant 10 comprend :

- une inductance $L_2$ connectée en série entre l'interrupteur S et le noeud A, et une diode Dp connectée en parallèle sur l'interrupteur avec son anode con-

nectée au noeud $B_3$ et sa cathode connectée au point de connexion 11 entre l'interrupteur S et l'inductance $L_2$;

- une diode $D_2$ et un condensateur de résonance Cres connectés en série entre les noeuds A et $B_3$;
- une inductance Lres et un interrupteur auxiliaire Saux en parallèle sur le condensateur de résonance Cres ; l'inductance étant connectée au point de connexion 12 entre le condensateur de résonance Cres et ladite deuxième diode;
- une deuxième diode Daux en parallèle sur l'interrupteur auxiliaire Saux, avec sa cathode connectée au point de connexion 13 entre l'interrupteur auxiliaire Saux et l'inductance Lres.

En pratique les diodes Daux et Dp peuvent être chacune réalisées par un composant discret placé en parallèle sur le transistor IGBT associé, c'est à dire en parallèle sur Saux et S respectivement, ou bien intégrée avec ce transistor dans un même boîtier.

Les différentes phases de fonctionnement de la cellule $BC_i$ avec le circuit résonnant 10 selon l'invention sont les suivantes :

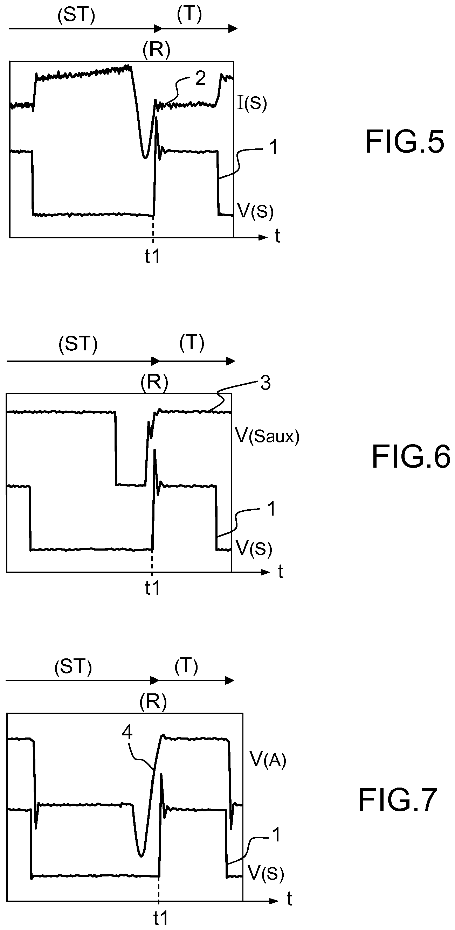

- Phase de stockage d'énergie ST (figures 5 à 7) : l'interrupteur S est commandé à l'état fermé (passant). La diode D se bloque. L'inductance L de la cellule emmagasine l'énergie électrique sous forme électromagnétique.
- Phase de résonance R (figures 5 à 7) : L'interrupteur Saux est commuté à l'état fermé (passant). La diode D est bloquée ; l'interrupteur S est toujours fermé.

La commutation à l'état fermé de l'interrupteur Saux, fait s'établir une résonance entre le condensateur Cres et l'inductance Lres : la tension aux bornes du condensateur Cres chute jusqu'à s'inverser; et la diode D2 est mise en conduction lorsque la tension de sa cathode (noeud 12) devient inférieure à celle de son anode (noeud A). Le courant qui traverse la diode D2, permet d'annuler le courant dans l'interrupteur S. L'interrupteur S peut être commuté à l'état ouvert, faisant passer la cellule de conversion en phase de transfert d'énergie.

Lorsque le courant dans l'interrupteur S s'annule, la diode en parallèle Dp permet de laisser passer le courant inverse et de terminer la phase de résonance, avec l'inductance L2, qui intervient alors puisque la diode Dp conduit : la tension aux bornes de l'interrupteur S est également nulle, par la conduction de Dp. La commutation de l'interrupteur S à l'état ouvert peut ainsi être une commutation douce, sans pertes d'énergie.

Avec l'interrupteur S commuté à l'état ouvert, on entre dans la phase de transfert d'énergie :

-Phase de transfert d'énergie T (figures 5 à 7) :

La diode D conduit, l'interrupteur S est ouvert, et l'interrupteur Saux est ouvert. L'énergie est transférée de l'inductance L au condensateur de sortie Cs. Le condensateur Cres est chargé sous la tension de sortie $U_s$.

Par rapport à l'état de l'art, on a ainsi une phase supplémentaire, la phase de résonance R, en fin de phase de stockage d'énergie ST. Cette phase de résonance est déclenchée par la commutation à l'état fermé de l'interrupteur auxiliaire Saux. Cette phase de résonance permet d'annuler le courant dans l'interrupteur S. Elle permet aussi d'annuler la tension à ses bornes. La commutation de l'interrupteur S à l'état ouvert, peut ainsi être réalisée sans pertes.

En outre, lorsque l'interrupteur S est mis en conduction, la diode D n'est pas immédiatement bloquée : elle conduit un courant inverse pendant un temps dit de recouvrement inverse. Pendant ce temps de recouvrement inverse, la tension aux bornes de l'interrupteur S est alors la tension de sortie. Sans l'inductance $L_2$ du circuit résonnant, il serait traversé par un niveau de courant élevé, entraînant une forte dissipation. L'inductance $L_2$ a pour effet de ralentir la croissance du courant dans la diode D et dans l'interrupteur S pendant cette phase de recouvrement inverse : l'inductance $L_2$ permet donc dans la phase de recouvrement inverse de la diode D, de limiter les pertes dans l'interrupteur S, et de permettre un blocage plus doux de la diode D, avec une diminution de la surtension à ses bornes. Ceci permet aussi de minimiser les pertes électromagnétiques conduites ou émises.

De manière plus détaillée, on rappelle que, lors de la mise en conduction d'un interrupteur, la tension chute à ces bornes avec une certaine vitesse, alors que celui-ci est traversé par le courant qui commence à s'établir. Pendant cette phase où une tension élevée est présente aux bornes du composant alors que celui-ci est déjà traversé par un courant, l'interrupteur présente ainsi une dissipation interne importante.

L'inductance L2 du circuit résonnant 10 de l'invention permet de limiter la vitesse de croissance du courant dans l'interrupteur S. Le niveau de courant devient ainsi plus faible pendant la phase de chute de tension aux bornes de l'interrupteur, et les pertes internes de l'interrupteur sont fortement diminuées.

On rappelle que la commutation en mode bloqué d'une diode passe par une phase de recouvrement inverse pendant laquelle elle est incapable de bloquer un courant inverse qui la traverse. Cette phase dure tant que les porteurs électrons et trous n'ont pas été évacués ou ne se sont pas recombinés. La durée de cette phase est appelée temps de recouvrement inverse et généralement noté trr.

Si on considère la cellule BC de la figure 1a, lors de la mise en conduction de l'interrupteur S, la diode D est ainsi incapable de se bloquer immédiatement : elle reste conductrice et est traversée par un courant inverse, tout le temps que dure la phase de recouvrement inverse. Pendant cette phase, la tension aux bornes de l'interrupteur S est la tension de sortie $U_s$ (puisque la diode conduit en inverse) : il est traversé par un niveau de courant élevé, qui est par exemple de l'ordre du tiers du courant nominal dans la cellule. Pour cette raison de présence simultanée de tension très élevée aux bornes de l'interrupteur et de courant, la phase de recouvrement inverse est fortement dissipative.

L'inductance L2 du circuit résonnant 10 de l'invention, comme illustré sur la figure 4, permet de ralentir la vitesse de croissance du courant dans l'interrupteur S (qui est passant) dans cette phase de recouvrement inverse. De cette façon, on réduit les pertes dans l'interrupteur.

La vitesse de croissance du courant inverse dans la diode est également ralentie. Cela permet de favoriser la recombinaison des porteurs dans la diode, plutôt que l'évacuation de ces porteurs par le courant. Il en résulte un blocage de la diode plus doux et une surtension aux bornes de la diode diminuée. De cette façon, le blocage de la diode s'effectue avec moins de pertes.

Les pertes dans l'interrupteur principal S lors des commutations à l'état passant sont ainsi réduites : on a des commutations douces.

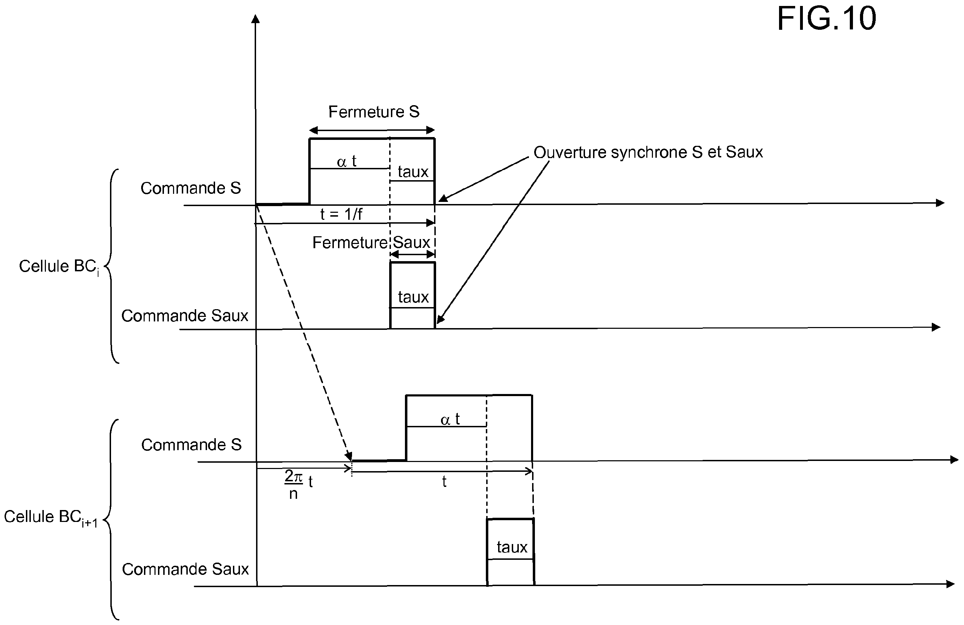

De manière similaire, le circuit résonnant 10 selon l'invention permet de forcer le blocage de l'interrupteur auxiliaire Saux sans pertes, à courant nul et à tension nulle, lorsque la diode Daux conduit et d'aider sa mise en conduction par l'inductance Lres : l'inductance Lres ralentit la montée du courant dans l'interrupteur Saux, ce qui permet de diminuer les pertes dans cet interrupteur et d'avoir une commutation douce. Comme illustré sur le chronogramme de la figure 10, dans chaque cellule :

- l'interrupteur Saux de chaque cellule est commandé par un signal de commande tel que l'interrupteur Saux conduit (est fermé) pendant une durée fixe $t_{aux}$.
- l'interrupteur S est commandé de manière à conduire pendant une durée $\alpha t + t_{aux}$.
- les deux interrupteurs S et Saux passent à l'état ouvert ou bloqué de manière synchronisée.

Le passage à l'état ouvert de l'interrupteur S d'une cellule, par exemple de la cellule $BC_i$, est décalé du passage à l'état ouvert de l'interrupteur S d'une autre cellule, par exemple $BC_{i+1}$, de $\dfrac{2\pi}{n}t$.

En pratique, les différents signaux de commande sont générés de manière connue par des circuits tels que des circuits de modulation de largeur d'impulsion (pour générer $\alpha t$, ou $\alpha t + taux$, typiquement), et des circuits de décalage temporel de durée fixe, (pour les durées taux et $\dfrac{2\pi}{n}t$ typiquement), avec des durées déterminées par simulation. En variante, on peut prévoir des circuits de détection de conditions d'ouverture ou de fermeture, tel que par exemple des circuits de détection d'un courant ou d'une tension nulle. Ces mises en oeuvres sont des techniques usuelles.

Les courbes des figures 5, 6 et 7 montrent les formes d'ondes obtenues pour une cellule $BC_i$ comprenant un circuit résonnant associé à l'interrupteur à découpage selon l'invention.

Sur la figure 5, les courbes 1 et 2 montrent la tension aux bornes de l'interrupteur S et le courant le traversant. On remarque en particulier la commutation à l'état ouvert, à zéro de courant et de tension, au temps t1.

Sur la figure 6, on retrouve la courbe 1 précédente montrant la tension aux bornes de l'interrupteur S et une courbe 3 montrant la tension aux bornes de l'interrupteur Saux.

Sur la figure 7, on retrouve la courbe 1 montrant la tension aux bornes de l'interrupteur S et une courbe 4 montrant la tension V(A) de l'anode (noeud A) de la diode D par rapport à zéro volt.

Sur les 3 figures, on distingue bien les trois phases de fonctionnement de stockage ST, de résonance R, et de transfert d'énergie T. L'instant t1 indiqué sur les figures 5 à 7, correspond au passage synchrone à l'état ouvert ou bloqué des interrupteurs S et Saux, marquant le passage à la phase de transfert d'énergie (T) et la fin de la phase de résonance (R).

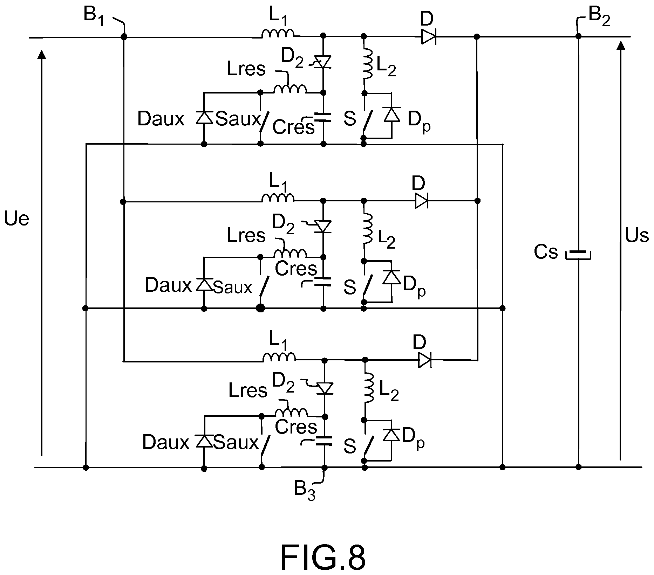

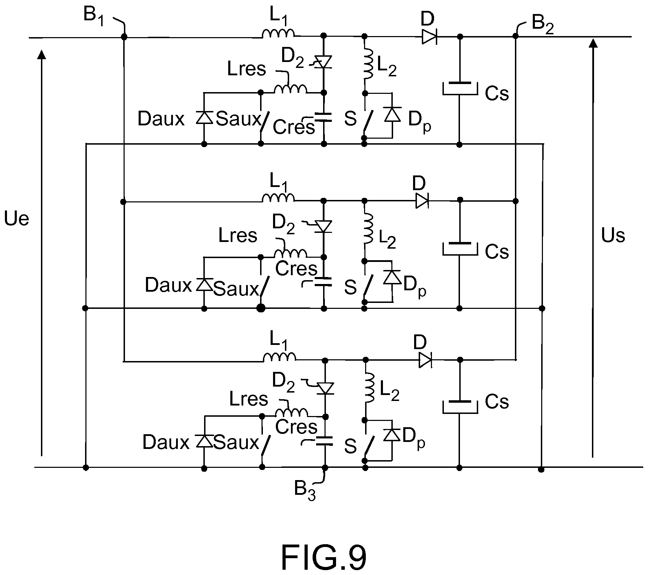

Les figures 8 et 9 illustrent deux modes de réalisation d'une alimentation à découpage DC DC à n=3 cellules entrelacées comprenant un circuit de résonance de l'interrupteur de découpage S dans chaque cellule.

La figure 8 correspond à une architecture préférée, à condensateur de sortie $C_s$ unique. L'invention permet de réaliser une telle architecture entrelacée à condensateur de sortie unique, sans avoir à se soucier de la valeur des inductances de câblage. Et les contraintes de placement et de refroidissement des composants peuvent être respectées.

La figure 9 correspond à une architecture à n cellules entrelacées et n condensateurs de sortie, un par cellule.

L'invention permet en effet de réaliser une telle architecture à n condensateurs de sortie sans les inconvénients de l'état de l'art. En effet, les inductances $L'_w$ de câblage (figure 3) entre les condensateurs deviennent parti intégrantes de l'inductance de résonance L2, participant ainsi à la phase de résonance. Et le circuit résonnant de l'invention, rend inutile le besoin de minimiser l'inductance de câblage $L_w$ de la boucle (S, D, Cs) de transfert de charge.

Le choix de l'une ou l'autre architecture sera en pratique réalisé en fonction de critères de disponibilités des composants standards ou de critères d'encombrement.

Une architecture à n cellules entrelacées associant un circuit résonnant à l'interrupteur de découpage de chaque cellule permet ainsi d'obtenir une alimentation dont les performances sont améliorées, avec une tolérance de l'architecture aux inductances de câblage qui se traduit par une très faible ondulation des courants d'entrée et du (ou des) condensateur(s) de sortie, une latitude au niveau de l'implantation géographique des composants, et une facilité de la gestion thermique du convertisseur et un rendement supérieur.

Elle a aussi les avantages supplémentaires suivants :

- une minimisation des pertes de commutations des interrupteurs S et Saux dans chaque cellule,
- une augmentation du rendement de conversion de chaque cellule,
- une diminution des pertes dans les diodes D dues aux faibles contraintes en vitesse de blocage,
- une minimisation des perturbations électromagnétiques conduites et rayonnées.

Une alimentation à découpage DC DC selon l'invention est plus particulièrement applicable pour fournir une tension régulée à une charge Z, à partir de la tension fournie par une pile à combustible PC (Figure 4).

**Revendications**

1. Alimentation à découpage DC DC non isolée, pour fournir une tension continue (Vs) à partir d'une tension continue (Ve) appliquée en entrée, comprenant n cellules de conversion (BC$_i$) parallèles, entrelacées, n au moins égal à 2, chaque cellule comportant un interrupteur principal (S) recevant une commande de commutation à l'état fermé et à l'état ouvert pour respectivement fermer ou ouvrir un chemin de conduction entre un premier noeud (A) et un deuxième noeud (B$_3$) de la cellule, permettant respectivement une phase de stockage d'énergie dans un élément de stockage (L) et une phase de transfert d'énergie vers un condensateur de sortie (Cs) connecté entre une borne de sortie (B$_2$) de la cellule et une borne commune (B$_3$), l'interrupteur principal (S) faisant partie d'un circuit résonant comprenant un interrupteur auxiliaire (Saux) permettant de déclencher une phase de résonance du circuit résonant, **caractérisée en ce qu'**elle comporte des moyens pour déclencher la phase de résonance alors que l'interrupteur principal (S) de la cellule considérée est à l'état fermé, ladite phase de résonance permettant l'annulation du courant dans ledit interrupteur principal (S) de la cellule, et des moyens pour ouvrir l'interrupteur principal pendant cette annulation du courant.

2. Alimentation à découpage DC DC non isolée, selon la revendication 1, **caractérisée en ce que** ladite phase de résonance permet l'annulation du courant dans ledit interrupteur auxiliaire (Saux), permettant une commutation à l'état ouvert dudit interrupteur auxiliaire.

3. Alimentation à découpage DC DC non isolée, selon la revendication 2, dans laquelle la commutation à l'état ouvert dudit interrupteur principal (S) d'une cellule, est synchrone de la commutation à l'état ouvert de l'interrupteur auxiliaire (Saux) du circuit résonnant de la cellule considérée.

4. Alimentation à découpage DC DC non isolée selon l'une des revendications précédentes, dans laquelle ledit circuit résonnant (10) comprend :

   - une première inductance (L2) connectée en série entre ledit interrupteur principal et ledit premier noeud, et une première diode (Dp) connectée en parallèle sur ledit interrupteur avec son anode connectée au dit deuxième noeud et sa cathode connectée au point de connexion entre l'interrupteur et ladite première inductance; et
   - une deuxième diode (D2) et un condensateur de résonance (Cres) connectés en série entre lesdits premier et deuxième noeuds,
   - une deuxième inductance (Lres) et l'interrupteur auxiliaire (Saux) en parallèle sur ledit condensateur de résonance (Cres), ladite deuxième inductance étant connectée au point de connexion entre ledit condensateur de résonance et ladite deuxième diode;
   - une deuxième diode (Daux) en parallèle sur ledit interrupteur auxiliaire, avec sa cathode connectée au point de connexion entre ledit interrupteur auxiliaire (Saux) et ladite deuxième inductance (Lres).

5. Alimentation à découpage DC DC non isolée, selon l'une des revendications 1 à 4, **caractérisée en ce qu'**elle comprend un unique condensateur de sortie (C$_s$), commun à toutes les cellules (BC$_i$).

6. Alimentation à découpage DC DC non isolée, selon l'une des revendications 1 à 4, **caractérisée en ce qu'**elle comprend un condensateur de sortie (Cs$_i$) par cellule (BC$_i$).

7. Alimentation à découpage DC DC non isolée, selon l'une quelconque des revendications précédentes, du type élévateur de tension.

8. Alimentation à découpage DC DC non isolée, selon l'une quelconque des revendications 1 à 6, du type abaisseur de tension.

9. Alimentation à découpage DC DC non isolée, selon l'une quelconque des revendications 1 à 6, du type inverseur et/ou abaisseur/éleveur de tension.

10. Système d'alimentation d'une charge (Z) comprenant une pile à combustible (PC) suivie d'au moins une alimentation à découpage DC DC non isolée selon l'une quelconque des revendications précédentes, pour fournir un niveau régulé de tension continue à ladite charge.

**Patentansprüche**

1. Stromversorgung mit nicht isolierter DC-DC-Teilung zum Liefern einer Gleichspannung (Vs) ausgehend von einer Gleichspannung (Ve), die am Eingang angelegt wird, die n parallele, verschachtelte Umwandlungszellen (BC$_i$), umfasst, wobei n mindestens gleich 2 ist, wobei jede Zelle einen Hauptschalter (S) umfasst, der einen Umschaltbefehl auf den geschlossenen Zustand und auf den offenen Zustand empfängt, um jeweils einen Leitungsweg zwischen einem ersten Knoten (A) und einem zweiten Knoten (B$_3$) der Zelle jeweils zu schließen oder zu öffnen, indem jeweils eine Energiespeicherphase in einem Speicherelement (L) und eine Energietransferphase zu einem Ausgangskondensator (Cs), der zwischen einer Ausgangsklemme (B$_2$) der Zelle und einer gemeinsamen Klemme (B$_3$) verbunden ist, erlaubt werden, wobei der Hauptschalter (S) Teil eines Schwingkreises ist, der einen Hilfsschalter (Saux) umfasst, der es erlaubt, eine Resonanzphase des Schwingkreises auszulösen, **dadurch gekennzeichnet, dass** sie Mittel umfasst, um die Resonanzphase auszulösen, während der Hauptschalter (S) der betreffenden Zelle in dem geschlossenen Zustand ist, wobei die Resonanzphase das Annullieren des Stroms in dem Hauptschalter (S) der Zelle erlaubt, und Mittel, um den Hauptschalter während dieser Annullierung des Stroms zu öffnen.

2. Stromversorgung mit nicht isolierter DC-DC-Teilung nach Anspruch 1, **dadurch gekennzeichnet, dass** die Resonanzphase das Annullieren des Stroms in dem Hilfsschalter (Saux) erlaubt, was eine Umschaltung auf den offenen Zustand des Hilfsschalters erlaubt.

3. Stromversorgung mit nicht isolierter DC-DC-Teilung nach Anspruch 2, wobei die Umschaltung auf den offenen Zustand des Hauptschalters (S) einer Zelle mit der Umschaltung auf den offenen Zustand des Hilfsschalters (Saux) des Schwingkreises der betreffenden Zelle synchron ist.

4. Stromversorgung mit nicht isolierter DC-DC-Teilung nach einem der vorhergehenden Ansprüche, wobei die Schwingschaltung (10) Folgendes umfasst:

    - eine erste Drosselspule (L2), die zwischen dem Hauptschalter und dem ersten Knoten in Reihe geschaltet ist, und eine erste Diode (Dp), die auf dem Schalter parallel geschaltet ist, mit ihrer Anode an dem zweiten Knoten verbunden und ihrer Kathode an dem Verbindungspunkt zwischen dem Schalter und der ersten Drosselspule verbunden, und
    - eine zweite Diode (D2) und einen Resonanzkondensator (Cres), die zwischen dem ersten und dem zweiten Knoten in Reihe geschaltet sind,
    - eine zweite Drosselspule (Lres) und den Hilfsschalter (Saux) parallel auf dem Resonanzkondensator (Cres), wobei die zweite Drosselspule mit dem Verbindungspunkt zwischen dem Resonanzkondensator und der zweiten Diode verbunden ist;
    - eine zweite Diode (Daux) parallel auf dem Hilfsschalter, mit ihrer Kathode mit dem Verbindungspunkt zwischen dem Hilfsschalter (Saux) und der zweiten Drosselspule (Lres) verbunden.

5. Stromversorgung mit nicht isolierter DC-DC-Teilung nach einem der Ansprüche 1 bis 4, **dadurch gekennzeichnet, dass** sie einen einzigen Ausgangskondensator (C$_s$), der allen Zellen (BC$_i$) gemeinsam ist, umfasst.

6. Stromversorgung mit nicht isolierter DC-DC-Teilung nach einem der Ansprüche 1 bis 4, **dadurch gekennzeichnet, dass** sie einen Ausgangskondensator (Cs$_i$) pro Zelle (BC$_i$) umfasst.

7. Stromversorgung mit nicht isolierter DC-DC-Teilung nach einem der vorhergehenden Ansprüche des Typs Spannungsaufwärtswandler.

8. Stromversorgung mit nicht isolierter DC-DC-Teilung nach einem der Ansprüche 1 bis 6 des Typs Spannungsabwärtswandler.

9. Stromversorgung mit nicht isolierter DC-DC-Teilung nach einem der Ansprüche 1 bis 6 des Typs Inverter und/oder Spannungsabwärtswandler / Spannungsaufwärtswandler.

10. Versorgungssystem einer Charge (Z), die eine Brennstoffzelle (PC) gefolgt von mindestens einer Stromversorgung mit nicht isolierter DC-DC-Teilung nach einem der vorhergehenden Ansprüche umfasst, um einen regulierten Gleichspannungspegel an die Charge zu liefern.

**Claims**

1. A power supply with non-isolated DE DC splitting, for supplying a direct current voltage (Vs) from a direct current voltage (Ve) applied at the input, including n parallel, interlaced conversion cells (BC$_i$), n being at least equal to 2, each call comprising a main switch (S) receiving a command to switch to the closed state and to the open state in order to respectively close or open a conduction path between a first node (A) and a second node (B₃) of the cell, permitting respectively a phase for storing energy in a storage element (L) and a phase for transferring energy to an output capacitor (Cs) connected between an output terminal (B₂) of the cell and a common terminal (B₃), the main switch (S) forming part of a resonant circuit including an auxiliary switch (Saux) permitting triggering of a resonance phase of the resonant circuit, **characterized in that** it comprises means for triggering the resonance phase while the main switch (S) of the cell in question is in the closed state, said resonance phase permitting the cancellation of the current in said main switch (S) of the cell, and means for opening the main switch during this cancellation of the current.

2. The power supply with non-isolated DC DC splitting, according to claim 1, **characterized in that** said resonance phase permits the cancellation of the current in said auxiliary switch (Saux), permitting a switching to the open state of said auxiliary switch.

3. The power supply with non-isolated DC DC splitting, according to claim 2, in which the switching to the open state of said main switch (S) of a cell is synchronous with the switching to the open state of the auxiliary switch (Saux) of the resonant circuit of the cell in question.

4. The power supply with non-isolated DC DC splitting according to one of the preceding claims, in which said resonant circuit (10) includes:

   - a first inductor (L2) connected in series between said main switch and said first node, and a first diode (Dp) connected in parallel on said switch with its anode connected to said second node and its cathode connected to the connection point between the switch and said first inductor; and
   - a second diode (D2) and a resonance capacitor (Cres) connected in series between said first and second nodes,
   - a second inductor (Lres) and the auxiliary switch (Saux) in parallel on said resonance capacitor (Cres), said second inductor being connected to the connection point between said resonance capacitor and said second diode;
   - a second diode (Daux) in parallel on said auxiliary switch, with its cathode connected to the connection point between said auxiliary switch (Saux) and said second inductor (Lres).

5. The power supply with non-isolated DC DC splitting, according to one of claims 1 to 4, **characterized in that** it includes a single output capacitor (C_s) common to all the cells (BC_i).

6. The power supply with non-isolated DC DC splitting, according to one of claims 1 to 4, **characterized in that** it includes one output capacitor (Cs_i) per cell (BC_i).

7. The power supply with non-isolated DC DC splitting, according to any one of the preceding claims, of the voltage step-up type.

8. The power supply with non-isolated DC DC splitting, according to any one of claims 1 to 6, of the voltage step-down type.

9. The power supply with non-isolated DC DC splitting, according to any one of claims 1 to 6, of the voltage inverter and/or step-down/step-up type.

10. A system for powering a load (Z) including a fuel cell (PC) followed by at least one power supply with non-isolated DC DC splitting according to any one of the preceding claims, in order to provide a regulated level of direct current voltage to said load.

FIG.1a

FIG.1b

FIG.1c

FIG.2

FIG.3

EP 2 258 037 B1

FIG.4

FIG.5

FIG.6

FIG.7

FIG.8

FIG.9

EP 2 258 037 B1

# FIG.10

Fermeture S

Ouverture synchrone S et Saux

$\alpha\,t$

taux

**Commande S**

$t = 1/f$

Fermeture Saux

Cellule BC$_i$

taux

**Commande Saux**

$\alpha\,t$

**Commande S**

$\dfrac{2\pi}{n}\,t$   $t$

Cellule BC$_{i+1}$

taux

**Commande Saux**

EP 2 258 037 B1

**EP 2 258 037 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030095421 A